# FASCICULE DE BREVET EUROPEEN

(11) **EP 2 803 903 B1**
(45) Date de publication et mention de la délivrance du brevet: **27.07.2022**
(21) Numéro de dépôt: 14167001.8
(22) Date de dépôt: 05.05.2014
(51) Int. Cl.: F21S 43/14, F21S 43/235, F21S 43/249, F21S 43/20, F21S 43/30, F21S 43/33, F21S 43/40, G02B 6/00

(54) **Dispositif de signalisation pour véhicule automobile**
Signalleuchte für ein Kraftfahrzeug
Signalling device for a motor vehicle

(30) Priorité: 13.05.2013 FR 1354244
(43) Date de publication de la demande: 19.11.2014
(73) Titulaire: VALEO VISION, 93012 Bobigny Cedex (FR)
(72) Inventeur: Albou, Pierre, 75013 PARIS (FR); Puente, Jean-Claude, 93190 LIVRY GARGAN (FR)
(74) Mandataire: Valeo Visibility

(56) Documents cités:
- EP-A1- 0 660 032
- EP-A1- 2 161 494
- EP-A1- 2 503 222
- EP-A2- 2 527 722
- EP-A2- 2 551 579
- DE-A1- 19 939 087
- FR-A1- 2 947 325
- JP-A- 2006 208 471
- US-A1- 2006 227 302
- US-A1- 2009 052 189
- US-A1- 2011 216 549

## Description

La présente invention concerne un dispositif d'éclairage et/ou de signalisation bi-couleur pour véhicule automobile. Elle est en particulier destinée aux feux de position et de feu clignotant. Un tel dispositif est connu des documents EP 2 503 222 A1, FR 2 947 325 et EP 2 161 494 A1.

Dans ce domaine, il est usuel d'utiliser des dispositifs d'éclairage et/ou de signalisation différents pour chaque fonction, juxtaposés les uns à côté des autres.

On sait aussi que les constructeurs souhaitent se singulariser, notamment avec des éléments visuellement originaux, afin d'être identifiables plus facilement par rapport aux concurrents.

Il est ainsi connu de fabriquer des dispositifs d'éclairage et/ou de signalisation, regroupant plusieurs fonctions, en projetant deux types de lumière par un même feu, combinant par exemple le clignotant et un autre feu de signalisation tel que le feu de position et/ou un feu d'éclairage diurne. Pour cela, les dispositifs connus utilisent des sources lumineuses de couleurs différentes correspondant à chaque fonction.

Par ailleurs, des technologies plus récentes ont été mises au point, avec des dispositifs munis d'une source lumineuse, en général une diode électroluminescente, et un guide de lumière à travers lequel se propage un faisceau lumineux issu de la source. La lumière se propage dans le guide par réflexion totale jusqu'à une face de sortie, qui projette la lumière de façon à être vu par les véhicules qui le suivent ou le précèdent.

Dans le domaine automobile, de tels dispositifs sont appréciés car ils permettent de proposer une grande variété de forme et de types de lumière, associant un design original, une compacité notable, alliés à une efficacité lumineuse suffisante.

Cependant, lorsqu'on veut fabriquer des dispositifs de ce type avec plusieurs fonctions, on souhaite éviter de multiplier les guides de lumière. En effet, l'utilisation de plusieurs dispositifs juxtaposés engendre des coûts de production plus importants, ainsi qu'une perte d'espace et une perte esthétique par rapport à un dispositif unique capable de fonctionner pour plusieurs fonctions simultanément.

Une solution consiste à utiliser un seul guide de lumière dans lequel se propagent des faisceaux de lumière émis par des sources lumineuses différentes, chacune ayant une couleur spécifique à son utilisation. Ainsi, il suffit d'actionner l'allumage d'une des sources pour que la lumière émise par le guide ait une couleur conforme à sa fonction.

Néanmoins, l'agencement des diodes par rapport au guide est particulièrement sensible, et provoque une perte importante de l'intensité lumineuse si l'un des faisceaux n'est pas orienté correctement à son entrée dans le guide. Or, lorsque deux sources sont utilisées, il n'est pas possible de les disposer toutes les deux correctement dans l'axe de la face d'entrée du guide. Ainsi, soit une seule source est bien centrée et l'autre est excentrée, soit les deux sont mal centrées, et les faisceaux émis ne sont pas correctement orientés. Par conséquent, les critères de performance exigés ne sont pas atteints en superposant deux sources lumineuses sur la face d'entrée du guide lumineux.

Il existe aussi des diodes électroluminescentes bi-couleurs, mais elles ne sont pas assez puissantes, notamment pour leur utilisation comme clignotant, qui nécessite en général, une intensité lumineuse plus importante qu'un feu de position.

L'invention vise donc à obtenir un dispositif, muni d'un guide de lumière unique, capable d'atteindre les critères de luminosité exigés pour remplir deux fonctions différentes, à partir de deux sources lumineuses.

Pour cela, le dispositif d'éclairage et/ou de signalisation pour véhicule automobile, comprend les caractéristiques de la revendication 1.

On dispose ainsi d'un dispositif capable de remplir deux fonctions en utilisant un seul guide de lumière, avec deux sources de lumières différentes. Il apporte de la sorte, une solution compacte au problème des dispositifs combinant plusieurs fonctions lumineuses.

Le dispositif unique évite une superposition complexe de plusieurs guides lumineux séparés sur le véhicule concerné et permet de gagner de la place et de faire des économies sur le matériau utilisé pour fabriquer les guides.

D'autre part, il ouvre de nouvelles possibilités concernant l'aspect esthétique, notamment pour les concepteurs et designers automobiles, grâce à une technologie innovante, celle des guides de lumières, chacun des faisceaux étant correctement orienté à son entrée dans le guide.

Il permet en outre de remplir les critères de performances, en terme de luminosité, demandés pour chacune des fonctions.

Selon différents modes de réalisation de l'invention, qui pourront être pris ensemble ou séparément :
- ledit axe de propagation correspond à un axe perpendiculaire à ladite face d'entrée du guide de lumière,
- ledit axe perpendiculaire passe au centre de ladite face d'entrée,
- lesdits moyens pour dévier ledit second faisceau comprennent un dispositif optique apte à réfléchir le deuxième faisceau lumineux vers ladite face d'entrée du guide de lumière,
- ledit écran est un réflecteur interférentiel,
- ledit réflecteur interférentiel est configuré pour réfléchir une lumière dont la longueur d'onde correspond à une couleur du deuxième faisceau lumineux,
- lesdites sources lumineuses sont situées à distance de ladite face d'entrée,
- lesdites sources lumineuses sont positionnées relativement l'une par rapport à l'autre de façon à ne pas occulter le faisceau émis par l'autre source,
- ledit réflecteur interférentiel est disposé entre le guide de lumière et la première source de lumière,
- la deuxième source lumineuse est disposée de manière à émettre ledit deuxième faisceau perpendiculairement audit premier faisceau,
- le positionnement du réflecteur interférentiel fait un angle de 45° avec la direction de propagation de chacun desdits faisceaux,
- le dispositif d'éclairage et/ou de signalisation comprend une lentille convergente,
- ladite lentille est disposée devant la face d'entrée dudit guide de lumière, de manière à être traversée par lesdits faisceaux,
- lesdites première et deuxième sources lumineuses sont munies de moyens de collimation des faisceaux lumineux,
- lesdits moyens de collimation sont disposés à l'avant des sources lumineuses,
- lesdites sources lumineuses sont des diodes électroluminescentes,
- l'intensité desdites sources lumineuses peut être réglée.

L'invention sera mieux comprise à la lumière de la description suivante qui n'est donnée qu'à titre indicatif et qui n'a pas pour but de la limiter, accompagnée du dessin joint :
- la figure 1 illustrant de façon schématique, une vue de côté d'un dispositif d'éclairage ou de signalisation selon l'invention, représenté avec le trajet des rayons lumineux,
- la figure 2 illustre de façon schématique une vue de côté d'une variante de réalisation du guide de lumière du dispositif de la figure 1.

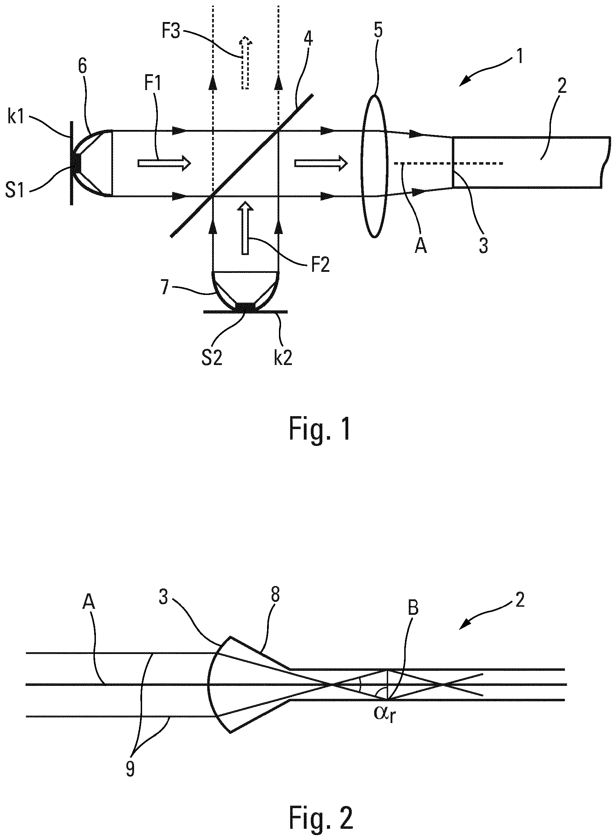

Comme illustré sur la figure 1, l'invention concerne un dispositif d'éclairage et/ou de signalisation 1 comprenant une première source lumineuse S1 apte à émettre un premier faisceau lumineux F1 et une deuxième source lumineuse S2 apte à émettre un deuxième faisceau lumineux F2. Lesdites première et deuxième sources lumineuses S1, S2 pourront avantageusement être munies de moyens de collimation 6, 7 des faisceaux lumineux F1, F2 tels que des réflecteurs, pour assurer un faisceau de rayons parallèles et orienter chacun desdits faisceaux lumineux F1, F2 dans une direction.

Ici, lesdites sources lumineuse S1, S2 comprennent chacune une diode électroluminescente disposée sur un support k1, k2 de type PCB, en particulier un support de type substrat métallique isolé.

Lesdits premier et deuxième faisceaux lumineux F1, F2 sont de deux couleurs différentes afin d'offrir la possibilité d'émettre hors du dispositif une lumière dans au moins deux couleurs et donc de remplir deux fonctions avec un seul guide de lumière.

Le dispositif sert à la fois de feu de position et de feu clignotant, la première source lumineuse S1 est de couleur blanche et la deuxième source lumineuse S2 est de couleur jaune. L'intensité desdites sources lumineuses S1, S2 peut être réglée pour répondre aux critères exigés dans les deux fonctions et pour permettre aussi des variations de couleurs lorsque les sources fonctionnent ensemble.

Le dispositif comprend en outre un guide de lumière 2 configuré pour guider lesdits faisceaux lumineux F1, F2 et projeter la lumière à l'extérieur du dispositif 1. Les faisceaux lumineux F1, F2 entrent dans le guide de lumière 2 par une face d'entrée 3 et sont dirigés par réflexion totale sur les parois dudit guide 2 jusqu'à une face de sortie. De manière connue, ledit guide comprend une face de réflexion, munie de motifs optiques, permettant à une partie des rayons se propageant dans le guide d'en sortir par la face de sortie, prévue opposée à ladite face de réflexion.

Grâce à ce dispositif 1, il suffit d'un seul guide de lumière pour une utilisation dans deux fonctions différentes. C'est notamment intéressant si le guide est plat ou linéaire, avec une face d'entrée trop petite pour y agencer deux sources lumineuses côte à côte.

Plus précisément, selon l'invention, ledit dispositif 1 est configuré pour diriger l'un au moins desdits faisceaux lumineux F1, F2, de façon à ce qu'ils soient, chacun, sensiblement centrés autour d'un même axe de propagation A lorsqu'ils rencontrent ladite face d'entrée 3 du guide de lumière 2. Ainsi, les deux faisceaux lumineux F1, F2 suivent sensiblement le même chemin dans le guide de lumière 2. Aucun faisceau n'est défavorisé par rapport à l'autre à leur entrée respective dans le guide de lumière 2.

Ledit axe de propagation A correspond, par exemple, à un axe perpendiculaire à ladite face d'entrée 3 du guide de lumière 2, ledit axe perpendiculaire A passant au centre de ladite face d'entrée 3. Ainsi, les faisceaux lumineux F1, F2 sont bien centrés sur ladite face d'entrée 3 du guide 2 pour éviter les pertes lumineuses et obtenir l'intensité lumineuse maximum en sortie du guide 2. Comme les faisceaux lumineux F1, F2 sont bien centrés, des critères de performance suffisants sont atteints pour les deux fonctions. Par ailleurs, cette caractéristique permet aussi d'utiliser des diodes électroluminescentes dont l'intensité est plus faible, tout en gardant des performances convenables pour l'intensité.

La première source lumineuse S1 est disposée de façon à émettre ledit premier faisceau F1 vers ladite face d'entrée 3 du guide de lumière 2 selon ledit axe de propagation A. Par conséquent, le premier faisceau F1 est centré de façon optimale par rapport au guide de lumière 2, sans nécessiter de disposition particulière dans le dispositif 1 pour dévier ledit faisceau F1.

En revanche, ladite seconde source S2 émet ledit second faisceau F2 selon une direction transversale audit axe de propagation A. Le deuxième faisceau F2 est ici émis perpendiculairement audit axe de propagation A et donc audit premier faisceau F1.

Ledit dispositif 1 comprend, en plus, des moyens pour dévier ledit second faisceau F2, vers le guide de lumière 2. Il s'agit d'un dispositif optique 4 qui réfléchit le deuxième faisceau lumineux F2 vers ladite face d'entrée 3 du guide de lumière 2, de sorte qu'il soit centré autour du même axe de propagation A que le faisceau F1.

Ledit dispositif optique 4 est un réflecteur interférentiel configuré pour réfléchir la lumière dont la longueur d'onde correspond à la couleur du deuxième faisceau lumineux F2, et pour laisser passer les autres couleurs. De cette manière, il réfléchit entièrement le faisceau lumineux F2 vers le guide 2, et laisse passer la partie du faisceau lumineux F1 qui a une couleur différente de celle du faisceau lumineux F2.

Ledit réflecteur interférentiel est disposé entre le guide de lumière 2 et la première source de lumière S1. Ainsi, au moins une partie du faisceau lumineux F1 traverse le réflecteur interférentiel vers le guide de lumière 2. Seules les rayons lumineux de la même couleur que ceux du faisceau lumineux F2 son déviés dans une autre direction que celle du guide 2 ; ils sont représentés par la flèche F3 sur la figure 1. Par exemple, si la source S1 est une lumière blanche et S2 est une lumière jaune, le réflecteur interférentiel est configuré pour dévier la lumière jaune. Dans ce cas, les rayons de couleur jaune F3 composant la lumière blanche du faisceau lumineux F1 sont déviés, et les autres rayons traversent le réflecteur interférentiel pour arriver au guide de lumière 2.

Le dispositif est utilisé à la fois pour un feu de position et un feu clignotant, de la manière suivante : la source S1 émet un faisceau F1 de couleur blanche et la source S2 émet un faisceau F2 de couleur jaune, le réflecteur interférentiel déviant les rayons de couleur jaune. Pour son utilisation comme feu de position, la source S1 est allumée, le faisceau F1 traverse le réflecteur jusqu'au guide 2, excepté la partie F3 jaune du faisceau qui est déviée. Afin de garder une lumière en sortie du dispositif, d'une couleur proche de celle du faisceau F1 blanc émis par la source S1, il est possible de compenser la perte de couleur jaune en allumant la source S2, notamment à faible intensité. Dans le cas d'un réflecteur présentant une sélectivité élevée, c'est-à-dire, permettant de conserver une lumière blanche, plus froide, en cas de perte de la couleur jaune, cette compensation pourra être évitée.

En outre, le fonctionnement du dispositif comme clignotant consiste à allumer de façon alternative la source S2 qui offre la bonne couleur en sortie du dispositif.

Le dispositif offre aussi la possibilité d'utiliser les deux fonctions simultanément, c'est-à-dire de faire fonctionner par exemple le clignotant alors que le feu de position est allumé. On pourra en particulier effectuer une compensation de la perte de la couleur jaune provenant de la source S1 en allumant la source S2 à plus forte intensité que dans le cas évoqué plus haut. Ceci permettra d'avoir en sortie une lumière avec une couleur blanche tirant sur le jaune, présentant un gain en flux lumineux et respectant de la sorte les réglementations.

De préférence, le positionnement dudit réflecteur interférentiel fait un angle de 45° avec la direction de propagation de chacun desdits faisceaux F1, F2, afin de réfléchir le faisceau lumineux F2 dont la direction est perpendiculaire à celle de l'axe de propagation A.

Avantageusement, ledit dispositif 1 comprend une lentille convergente 5 disposée devant la face d'entrée 3 dudit guide de lumière 2, pour guider la totalité des deux faisceaux lumineux F1, F2 et de les injecter dans le guide de lumière 2. C'est notamment utile si la largeur desdits faisceaux lumineux F1, F2 est plus grande que celle de ladite face d'entrée 3, par exemple pour un guide de lumière 2 linéaire ou plat, tel que cela est représenté sur la figure 1. Cela permet en outre d'éviter d'avoir à utiliser des réflecteurs interférentiels pouvant fonctionner avec des angles d'incidence variant sensiblement.

La lentille convergente 5 pourra être remplacée par une face réfractante courbe, formée à l'extrémité 8 du guide de lumière 2, l'extrémité ayant alors, par exemple, une forme de poire. Cette solution, représentée sur la figure 2, nécessite une focalisation calculée de sorte que le cône du faisceau convergent résultant de la focalisation des faisceaux parallèles 9 ait un angle total au sommet B inférieur à (π-2αᵣ), où αᵣ est l'angle limite du matériau du guide de lumière 2. Dans ce cas, la face d'entrée 3 est la face réfractante et le guide et son extrémité sont fabriqués d'une même matière.

Une tel mode de réalisation pourra en particulier être utilisé dans le cas d'un guide de lumière linéaire ou en forme de cordon, l'axe de propagation du guide sur lequel les faisceaux lumineux sont centrés lorsqu'ils rentrent dans le guide étant alors défini, par exemple, par la droite passant par la base de l'extrémité en forme de poire du guide et perpendiculaire au plan tangent à ladite base.

En outre, le dispositif n'est nullement limité à un seul filtre interférentiel et deux sources lumineuses, il pourrait ainsi comprendre plusieurs filtres et plusieurs sources lumineuses.

## Revendications

1. Dispositif d'éclairage et/ou de signalisation (1) pour véhicule automobile, comprenant une première source lumineuse (S1) apte à émettre un premier faisceau lumineux (F1), une deuxième source lumineuse (S2) apte à émettre un deuxième faisceau lumineux (F2), un guide de lumière (2) configuré pour guider lesdits faisceaux lumineux (F1, F2), ledit guide de lumière (2) comprenant une face d'entrée (3) desdits faisceaux lumineux (F1, F2), ledit dispositif (1) étant configuré pour diriger lesdits faisceaux lumineux (F1, F2) de façon à ce que chacun desdits faisceaux lumineux soient sensiblement centrés autour d'un même axe de propagation (A), commun à l'ensemble desdits faisceaux lumineux, lorsqu'ils rencontrent ladite face d'entrée (3) du guide de lumière (2), **caractérisé en ce que** lesdits premier et deuxième faisceaux lumineux (F1, F2) sont de deux couleurs différentes, la première source lumineuse (S1) étant de couleur blanche et la deuxième source lumineuse (S2) étant de couleur jaune, dans lequel le dispositif sert à la fois de feu de position et de feu clignotant, dans lequel la première source lumineuse (S1) est disposée de façon à émettre ledit premier faisceau (F1) vers ladite face d'entrée du guide de lumière (2) selon ledit axe de propagation (A), et dans lequel ladite seconde source (S2) émet ledit second faisceau (F2) selon une direction transversale audit axe de propagation (A) et ledit dispositif (1) comprend des moyens pour dévier ledit second faisceau.

2. Dispositif d'éclairage et/ou de signalisation selon la revendication 1, dans lequel ledit axe de propagation (A) correspond à un axe perpendiculaire à ladite face d'entrée (3) du guide de lumière (2), ledit axe perpendiculaire passant au centre de ladite face d'entrée (3).

3. Dispositif d'éclairage et/ou de signalisation selon l'une quelconque des revendications précédentes, dans lequel lesdits moyens pour dévier ledit second faisceau comprennent un dispositif optique (4) apte à réfléchir le deuxième faisceau lumineux (F2) vers ladite face d'entrée (3) du guide de lumière (2).

4. Dispositif d'éclairage ou de signalisation selon la revendication 3, dans lequel ledit dispositif optique (4) est un réflecteur interférentiel.

5. Dispositif d'éclairage et/ou de signalisation selon la revendication 4, dans lequel ledit réflecteur interférentiel est configuré pour réfléchir une lumière dont la longueur d'onde correspond à une couleur du deuxième faisceau lumineux (F2).

6. Dispositif d'éclairage et/ou de signalisation selon la revendication 4 ou 5, dans lequel ledit réflecteur interférentiel est disposé entre le guide de lumière (2) et la première source de lumière (S1).

7. Dispositif d'éclairage et/ou de signalisation selon la revendication 6, dans lequel la deuxième source lumineuse (S2) est disposée de manière à émettre ledit deuxième faisceau (F2) perpendiculairement audit premier faisceau (F1).

8. Dispositif d'éclairage et/ou de signalisation selon la revendication 7, dans lequel le positionnement du réflecteur interférentiel fait un angle de 45° avec la direction de propagation de chacun desdits faisceaux (F1, F2).

9. Dispositif d'éclairage et/ou de signalisation selon l'une quelconque des revendications précédentes, comprenant une lentille convergente (5).

10. Dispositif d'éclairage et/ou de signalisation selon la revendication 9, dans lequel ladite lentille (5) est disposée devant la face d'entrée (3) dudit guide de lumière (2), de manière à être traversée par lesdits faisceaux.

11. Dispositif d'éclairage et/ou de signalisation selon l'une quelconque des revendications précédentes, dans lequel lesdites première et deuxième sources lumineuses (S1, S2) sont munies de moyens de collimation (6, 7) desdits faisceaux lumineux (F1, F2).

12. Dispositif d'éclairage et/ou de signalisation selon l'une quelconque des revendications précédentes, dans lequel lesdites sources lumineuses (S1, S2) sont des diodes électroluminescentes.

## Patentansprüche

1. Beleuchtungs- und/oder Signalvorrichtung (1) für ein Kraftfahrzeug, die eine erste Lichtquelle (S1), die einen ersten Lichtstrahl (F1) emittieren kann, eine zweite Lichtquelle (S2), die einen zweiten Lichtstrahl (F2) emittieren kann, einen Lichtleiter (2) enthält, der konfiguriert ist, die Lichtstrahlen (F1, F2) zu leiten, wobei der Lichtleiter (2) eine Eintrittsseite (3) der Lichtstrahlen (F1, F2) enthält, wobei die Vorrichtung (1) konfiguriert ist, die Lichtstrahlen (F1, F2) so zu lenken, dass jeder der Lichtstrahlen im Wesentlichen um eine gleiche Ausbreitungsachse (A) zentriert ist, die der Gesamtheit der Lichtstrahlen gemeinsam ist, wenn sie auf die Eintrittsseite (3) des Lichtleiters (2) treffen, **dadurch gekennzeichnet, dass** die ersten und zweiten Lichtstrahlen (F1, F2) zwei unterschiedliche Farben haben, wobei die erste Lichtquelle (S1) von weißer Farbe ist und die zweite Lichtquelle (S2) von gelber Farbe ist, wobei die Vorrichtung sowohl als Positionslicht als auch als Blinklicht dient, wobei die erste Lichtquelle (S1) so angeordnet ist, dass sie den ersten Strahl (F1) gemäß der Ausbreitungsachse (A) zur Eintrittsseite des Lichtleiters (2) emittiert, und wobei die zweite Quelle (S2) den zweiten Strahl (F2) gemäß einer Richtung quer zur Ausbreitungsachse (A) emittiert, und die Vorrichtung (1) Einrichtungen enthält, um den zweiten Strahl umzulenken.

2. Beleuchtungs- und/oder Signalvorrichtung nach Anspruch 1, wobei die Ausbreitungsachse (A) einer Achse lotrecht zur Eintrittsseite (3) des Lichtleiters (2) entspricht, wobei die lotrechte Achse durch die Mitte der Eintrittsseite (3) verläuft.

3. Beleuchtungs- und/oder Signalvorrichtung nach einem der vorhergehenden Ansprüche, wobei die Einrichtungen zur Umlenkung des zweiten Strahls eine optische Vorrichtung (4) enthalten, die den zweiten Lichtstrahl (F2) zur Eintrittsseite (3) des Lichtleiters (2) reflektieren kann.

4. Beleuchtungs- oder Signalvorrichtung nach Anspruch 3, wobei die optische Vorrichtung (4) ein Interferenzreflektor ist.

5. Beleuchtungs- und/oder Signalvorrichtung nach Anspruch 4, wobei der Interferenzreflektor konfiguriert ist, ein Licht zu reflektieren, dessen Wellenlänge einer Farbe des zweiten Lichtstrahls (F2) entspricht.

6. Beleuchtungs- und/oder Signalvorrichtung nach Anspruch 4 oder 5, wobei der Interferenzreflektor zwischen dem Lichtleiter (2) und der ersten Lichtquelle (S1) angeordnet ist.

7. Beleuchtungs- und/oder Signalvorrichtung nach Anspruch 6, wobei die zweite Lichtquelle (S2) so angeordnet ist, dass sie den zweiten Strahl (F2) lotrecht zum ersten Strahl (F1) emittiert.

8. Beleuchtungs- und/oder Signalvorrichtung nach Anspruch 7, wobei die Positionierung des Interferenzreflektors einen Winkel von 45° mit der Ausbreitungsrichtung jedes der Strahlen (F1, F2) bildet.

9. Beleuchtungs- und/oder Signalvorrichtung nach einem der vorhergehenden Ansprüche, die eine konvergierende Linse (5) enthält.

10. Beleuchtungs- und/oder Signalvorrichtung nach Anspruch 9, wobei die Linse (5) vor der Eintrittsseite (3) des Lichtleiters (2) angeordnet ist, um von den Strahlen durchquert zu werden.

11. Beleuchtungs- und/oder Signalvorrichtung nach einem der vorhergehenden Ansprüche, wobei die ersten und zweiten Lichtquellen (S1, S2) mit Kollimationseinrichtungen (6, 7) der Lichtstrahlen (F1, F2) ausgestattet sind.

12. Beleuchtungs- und/oder Signalvorrichtung nach einem der vorhergehenden Ansprüche, wobei die Lichtquellen (S1, S2) Elektrolumineszenzdioden sind.

## Claims

1. Lighting and/or signalling device (1) for a motor vehicle, comprising a first light source (S1) capable of emitting a first light beam (F1), a second light source (S2) capable of emitting a second light beam (F2), a light guide (2) configured to guide said light beams (F1, F2), said light guide (2) comprising an input face (3) for said light beams (F1, F2), said device (1) being configured to direct said light beams (F1, F2) so that each of said light beams is substantially centred about one and the same propagation axis (A), common to both of said light beams, when they encounter said input face (3) of the light guide (2), **characterized in that** said first and second light beams (F1, F2) are of two different colours, the first light source (S1) being of white colour and the second light source (S2) being of yellow colour, wherein the device serves both as position light and as flashing light, wherein the first light source (S1) is disposed so as to emit first light beam (F1) towards said input face of the light guide (2) along said propagation axis (A), and wherein said second source (S2) emits said second beam (F2) in a direction transversal to said propagation axis (A) and said device (1) comprises means for deflecting said second beam.

2. Lighting and/or signalling device according to Claim 1, wherein said propagation axis (A) corresponds to an axis at right angles to said input face (3) of the light guide (2), said right-angled axis passing through the centre of said input face (3).

3. Lighting and/or signalling device according to either one of the preceding claims, wherein said means for deflecting said second beam comprise an optical device (4) capable of reflecting the second light beam (F2) towards said input face (3) of the light guide (2).

4. Lighting and/or signalling device according to Claim 3, wherein said optical device (4) is an interferential reflector.

5. Lighting and/or signalling device according to Claim 4, wherein said interferential reflector is configured to reflect a light whose wavelength corresponds to a colour of the second light beam (F2) .

6. Lighting and/or signalling device according to Claim 4 or 5, wherein said interferential reflector is disposed between the light guide (2) and the first light source (S1).

7. Lighting and/or signalling device according to Claim 6, wherein the second light source (S2) is disposed so as to emit said second beam (F2) at right angles to said first beam (F1).

8. Lighting and/or signalling device according to Claim 7, wherein the positioning of the interferential reflector forms an angle of 45° with the direction of propagation of each of said beams (F1, F2).

9. Lighting and/or signalling device according to any one of the preceding claims, comprising a convergent lens (5).

10. Lighting and/or signalling device according to Claim 9, wherein said lens (5) is disposed in front of the input face (3) of said light guide (2), so as to be passed through by said beams.

11. Lighting and/or signalling device according to any one of the preceding claims, wherein said first and second light sources (S1, S2) are provided with collimation means (6, 7) for collimating said light beams (F1, F2).

12. Lighting and/or signalling device according to any one of the preceding claims, wherein said light sources (S1, S2) are light-emitting diodes.
